# EUROPEAN PATENT APPLICATION

(11) **EP 2 091 296 A1**
(43) Date of publication of application: **19.08.2009**
(21) Application number: 08290147.1
(22) Date of filing: 15.02.2008
(51) Int. Cl.: H04W 88/02

(54) **Mobile terminal and method for operating a mobile terminal**

(71) Applicant: Alcatel Lucent, 75008 Paris (FR)
(72) Inventor: Roth, Martin, 71264 Ditzingen (DE)
(74) Representative: Wörz, Volker Alfred

(57) **Abstract**

It order to enable a mobile terminal comprising means for emitting radiation when communicating with a telecommunications network to be used in a radiation sensitive environment It is suggested that the mobile terminal comprises means for deactivating the emission of radiation while the mobile terminal is switched on.

## Description

### Specification

The invention relates to a mobile terminal connectable to a telecommunications network, wherein the mobile terminal comprises means for emitting radiation in order to communicate with the telecommunications network.

The invention further relates to a method for operating a mobile terminal connectable to a telecommunications network, wherein the mobile terminal emits radiation during communication with the telecommunications network.

Furthermore, the invention relates to a computer program for operating a mobile terminal, wherein the mobile terminal is connectable to a telecommunications network and emits radiation when communicating with the telecommunications network.

Mobile terminals are portable electronic devices used for mobile communication via a telecommunications network e.g. by connecting to a satellite network. Mobile terminals, such as mobile phones provide several applications beyond a standard application for voice communication. Such applications include electronic mail, short message service, and connection to the Internet. These applications depend on communicating with the telecommunications network. Therefore, the mobile terminal comprises an antenna system for receiving and emitting wireless data signals. Since the wireless data signals are based on electro-magnetic waves, mobile terminals emit (electro-magnetic) radiation.

The operation of electronic devices may be sensitive to radiation in a way that radiation may cause malfunctions of the electronic devices. Such electronic devices are used, e.g. in hospitals and in airplanes. In environments that comprise such sensitive electronic devices it is therefore not allowed to communicate via a mobile terminal, in order to prevent malfunctions of the electronic devices due to radiation emitted by a mobile terminal.

However, mobile terminals nowadays typically comprise several stand-alone applications that provide services not based on communicating via the telecommunications network. Such stand-alone applications include for example organiser functions, radio, MP3-player, video player, and text processing functions. However, these applications are not available in the radiation sensible environments, since the mobile terminals have to be switched off in order to avoid emitting radiation.

It is therefore an object of the present invention to provide a possibility to make stand-alone applications of a mobile terminal available in radiation sensitive environments.

The object is solved by a mobile terminal as mentioned above, wherein the mobile terminal comprises means for deactivating the emission of radiation while the mobile terminal is switched on. This enables to prevent the mobile terminal from emitting radiation, without having to switch off the mobile terminal. This in particular enables to interact with stand-alone applications provided by the mobile terminal, while the mobile terminal does not emit radiation. The present invention thus enables to deactivate the emission of radiation without switching off a mobile terminal.

According to a preferred embodiment of the present invention, the emission of radiation can be deactivated and again activated while the mobile terminal is switched on. Activating and deactivating the emission is controllable by a user of the mobile terminal. This could be achieved by displaying a menu, wherein the menu comprises selectable items that cause the radiation to be activated or deactivated upon selection of the appropriate item.

According to another preferred embodiment of the present invention, the emission of radiation can be activated or deactivated by activating a button at the mobile terminal. The button could be realised as a configurable button that can be used for activating or deactivating radiation, if the mobile terminal is in a specific mode. In particular, activating or deactivating the emission of radiation could be achieved by activating a predefined combination of buttons that are already available and the mobile terminal.

According to a preferred embodiment, the mobile terminal comprises a functionality that enables to automatically display a menu at power on for selecting whether radiation is to be activated. According to another embodiment, the mobile terminal comprises a functionality for automatically activating the emission of radiation at power on. This means that the mobile terminal can be used with all applications for communicating with the telecommunications network by default. However, according to still another preferred embodiment, the mobile terminal comprises means for automatically deactivating the emission of radiation at power on. This means, that the emission of radiation is deactivated or not activated at all at power on. This enables to switch on a mobile terminal, even in environments that are sensitive to radiation.

According to yet another advantageous embodiment, the mobile terminal comprises means for automatically activating the emission radiation at power on only if it was activated at the time of power off. This means in particular that the emission of radiation will not be activated at power on, if the mobile terminal was switched off while the emission of radiation was deactivated. Thus, if a user uses the mobile terminal frequently in a deactivated mode, the mobile terminal will start without emitting radiation, if the power is switched on. However, if a user frequently uses communication applications before switching off the mobile terminal, the emission of radiation will be activated at power on, thus automatically enabling communication with the telecommunications network.

According to another preferred embodiment of the present invention, the mobile terminal comprises means for predetermining whether at power on a menu for selecting when and how radiation is to be activated or deactivated is displayed. This enables the user to control the behaviour of the mobile terminal, e.g. by providing a setup menu for configuring the when and in which way the emission can be activated and/or deactivated.

Preferably, the mobile terminal comprises means for reactivating the emission of the radiation, only if a predetermined identification is entered into the mobile terminal. This enables only an authorized user to reactivate or to activate at all the emission of radiation. This could be in particular advantageous, if a mobile terminal is e.g. given to children for playing stand-alone games while the children should not be allowed to communicate with the telecommunications network, e.g. in order to avoid expensive phone calls or in order to prevent from using the mobile terminal for navigating in the Internet. The identification could be realised as a predetermined number that has to be entered in order to activate radiation. If the mobile terminal comprises a card reader, the identification could also be entered by inserting a card into the mobile terminal. Several well-known further ways of entering identifications for identifying authorized users can be applied here by a person skilled in the art.

The object is also solved by a method as mentioned above, wherein the emission of radiation is deactivated by a user of the mobile terminal, while the mobile terminal is switched on. Thus, the inventive method enables to use the mobile terminal for interacting with stand-alone applications, while the mobile terminal does not emit radiation.

The object is further solved by a computer program for operating on a mobile terminal, wherein the computer program is programmed to execute the inventive method.

Further features and embodiments of the present invention are shown in the accompanying figures.
- Figure 1: schematically shows a mobile terminal;
- figure 2: schematically shows a menu for activating or deactivating radiation; and
- figure 3: shows a flow chart of an embodiment of the inventive method.

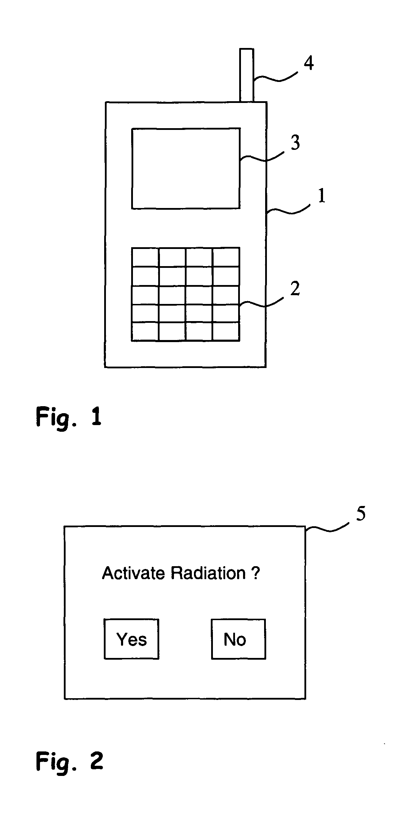

Figure 1 shows a mobile terminal 1 comprising a key pad 2 and a display 3. The mobile terminal 1 further comprises an antenna 4 for receiving and emitting radiation. The mobile terminal 1 could be realised as a mobile phone or a smart phone. The mobile terminal could also be realised as a device for communicating with the Internet via a wireless communication. The key pad 2 could also be realised as a keyboard. Further realizations of mobile terminal 1 are well known in the art.

Figure 2 shows a schematised menu that could be displayed after switching on the mobile terminal 1. The menu 5 enables the user to select, whether radiation should be activated or not. Menu 5 could also be displayed upon user activation of a predetermined button on the mobile terminal 1, e.g. by pressing a single key on the key pad 2 or by pressing a specific combination of keys.

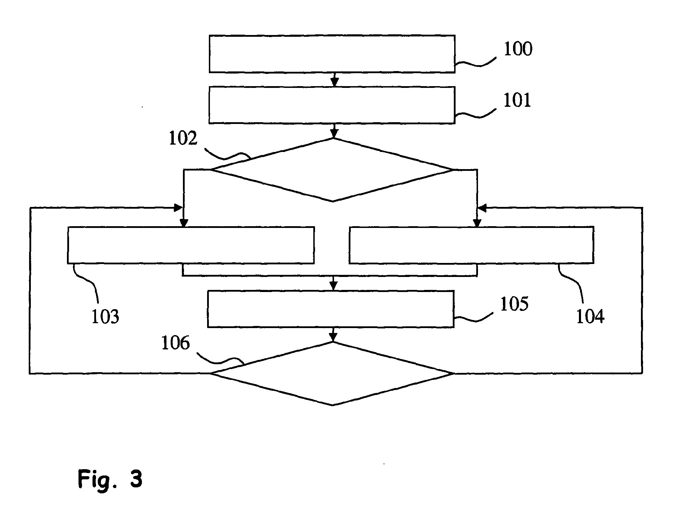

Figure 3 shows an embodiment of the inventive method. The method starts in a step 100, where the mobile terminal 1 is switched on. In a step 101 a menu is automatically displayed, e.g. a menu similar to menu 5 shown in figure 2. The user then selects an item. This could be achieved by pressing a button or "clicking" on the item.

In a step 102 the selection entered by the user is evaluated. If the user has chosen to activate radiation, the emission of radiation is activated in a step 103. Furthermore, both types of applications, stand-alone applications and communication-based applications can now be executed.

If the user has chosen in step 101 not to activate radiation, the emission of radiation is deactivated or remains deactivated in a step 104. However, stand-alone applications are executed.

While the mobile terminal 1 is in use, in a step 105 the user activates a menu for activating or deactivating the emission of radiation. The menu is displayed e.g. similar to the menu shown in figure 2. It is also conceivable that the user presses a predetermined button or a predetermined combination of buttons in order to activate or deactivate the emission of radiation. This means that the user can activate or deactivate the emission of radiation at any time while the mobile terminal is switched on.

In a step 106 the user interaction of step 105 is evaluated. If the user has chosen to activate the emission of radiation, the method continues in step 103. If the user has chosen to deactivate the emission of radiation, the method is continued in step 104.

The flow chart shown in figure 3 shows one of several possible embodiments of the present invention. In the embodiment shown in figure 3, the user can deactivate or reactivate the emission of radiation at any time, while the mobile terminal 1 is switched on. Furthermore, after switching on the mobile terminal, the user is automatically asked to decide, whether radiation should be activated or deactivated. However, it is also conceivable to abandon the feature of automatically displaying the menu for activation/deactivation the radiation.

According to preferred embodiments, the behaviour of the method could be configured by the user. This means that the user can decide, whether the mobile terminal displays the menu automatically at start up or any other default behaviour, as mentioned above.

## Claims

1. Mobile terminal (1) connectable to a wireless telecommunications network, wherein the mobile terminal (1) comprises means for emitting radiation in order to communicate with the telecommunications network, **characterized in that** the mobile terminal (1) comprises means for preventing the emission of radiation while the mobile terminal (1) is switched on.

2. The mobile terminal (1) of claim 2, **characterized in that** the mobile terminal (1) comprises a stand-alone application enabling interaction with the mobile terminal (1) without being connected to the wireless telecommunications network, wherein the stand-alone application is executable while the emission of radiation is deactivated.

3. The mobile terminal (1) of claim 1 or 2, **characterized in that** at least one of activating or deactivating the emission of radiation is controllable by a user of the terminal (1) at least by one of
- selecting an item in a menu;
- activating a button at the mobile terminal (1).

4. The mobile terminal (1) of any one of claims 1 to 3, **characterized in that** the mobile terminal (1) comprises means for
- automatically displaying a menu at power on for selecting whether radiation is to be activated;
- automatically activating the emission of radiation at power on;
- automatically deactivating the emission of radiation at power on; or
- automatically activating the emission of radiation at power on only if it was activated at the time of power off.

5. The mobile terminal (1) of claim 4, **characterized in that** the mobile terminal (1) comprises means for predetermining whether at power on
- the menu for selecting whether radiation is to be activated is displayed;
- the emission of radiation is automatically activated;
- the emission of radiation is automatically deactivated; or
- the emission of radiation is automatically activated at power on only if it was activated at the time of power off.

6. The mobile terminal (1) of anyone of claims 1 to 5, **characterized in that** the mobile terminal (1) comprises means for reactivating the emission of the radiation only if a predetermined identification is entered.

7. Method for operating a mobile terminal (1) connectable to a telecommunications network, wherein the mobile terminal (1) emits radiation when communicating with the telecommunications network, **characterized in that** the emission of radiation is deactivated by a user of the mobile terminal (1) while the mobile terminal (1) is switched on.

8. The method of claim 7, **characterized in that** a user of the mobile terminal (1) controls at least one of activating or deactivating the emission of radiation while the mobile terminal (1) is switched on by at least one of
- selecting an item in a menu;
- activating a button at the mobile terminal (1).

9. The method of claim 7 or claim 8, **characterized in that** at power on
- a menu for selecting whether radiation is to be activated is displayed automatically at power on;
- the emission of radiation is automatically activated;
- the emission of radiation is automatically deactivated; or
- the emission of radiation is automatically activated only if it was activated at the time of power off.

10. The method of claim 9, **characterized in that** the user predetermines by defining an appropriate setting, whether at power on
- the menu for selecting whether radiation is to be activated is displayed
- the emission of radiation is automatically activated;
- the emission of radiation is automatically deactivated; or
- the emission of radiation is automatically activated at power on only if it was activated at the time of power off.

11. The method of anyone of claims 7 to 11, **characterized in that** an identification is entered into the mobile terminal (1) and the emission of the radiation is only activated if the identification corresponds to a predetermined identification.

12. Computer program for operating a mobile terminal (1), **characterized in that** the computer program is programmed to execute a method according to anyone of claims 7 to 11, if the computer program is executed on the mobile terminal (1).
